# EUROPEAN PATENT SPECIFICATION

(11) **EP 2 082 901 B1**
(45) Date of publication and mention of the grant of the patent: **01.02.2012**
(21) Application number: 07832038.9
(22) Date of filing: 16.11.2007
(51) Int. Cl.: B60C 9/00, B60C 9/18, B60C 9/20, B60C 9/22

(54) **PNEUMATIC TIRE**
LUFTREIFEN
PNEU

(30) Priority: 17.11.2006 JP 2006311681
(43) Date of publication of application: 29.07.2009
(73) Proprietor: Kabushiki Kaisha Bridgestone, Tokyo 104-8340 (JP)
(72) Inventor: ISHIYAMA, Makoto, Kodaira-shi Tokyo 187-8531 (JP); KOIDE, Masafumi, Kodaira-shi Tokyo 187-8531 (JP); KAWAI, Takashi, Kodaira-shi Tokyo 187-8531 (JP); KATAYAMA, Shinsaku, Kodaira-shi Tokyo 187-8531 (JP)
(74) Representative: Whalley, Kevin
(86) International application number: PCT/JP2007/072308
(87) International publication number: WO 2008/059967

(56) References cited:
- EP-A1- 0 600 398
- EP-A1- 0 790 143
- EP-A2- 0 410 673
- EP-A2- 0 422 881
- DE-A1- 4 209 817
- JP-A- 05 116 507
- JP-A- 05 310 008
- JP-A- 06 016 010
- JP-A- 08 091 013
- JP-A- 2000 006 614
- US-A1- 2006 196 590

## Description

### FIELD OF THE INVENTION

The present invention generally relates to a pneumatic tire, and more particularly, the present invention relates to a pneumatic tire having excellent control stability and durability in a car driving at high speed.

### BACKGROUND OF THE INVENTION

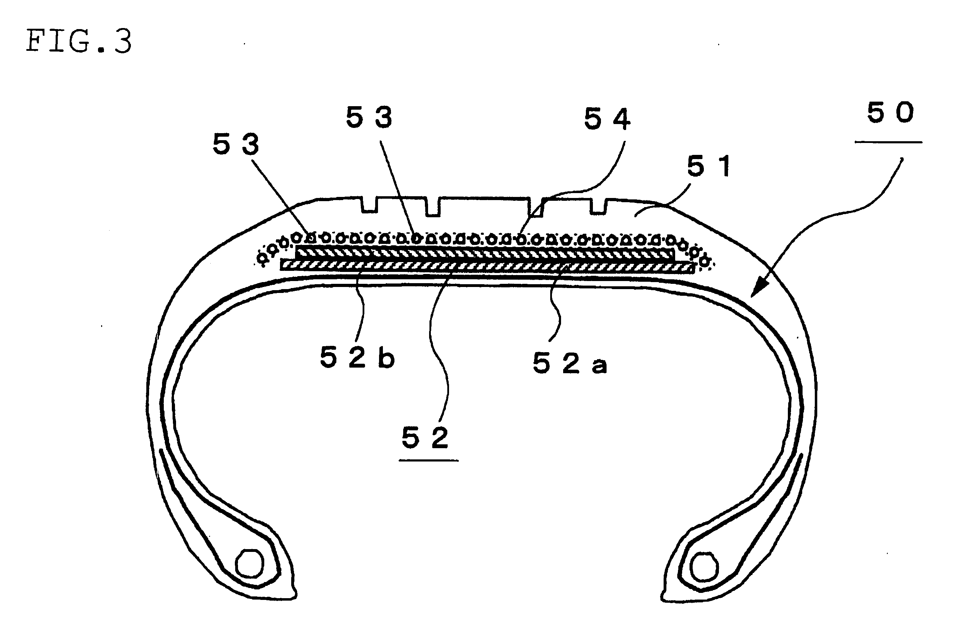

According to a tire designed for high speed driving such as a tire used in a high-performance car, great centrifugal force generates when rotation speed of the tire is high. In such the case, a belt layer, which is disposed on an inner side of a tread portion, separates from a rubber around it. Such separation causes rising of both end portions of the belt layer in a width direction. Due to the rising of the belt layer, the tread portion is expanded to outside. As a result, there is possibility that control stability declines. In order to control the above expansion, the pneumatic tire 50 as shown in the Fig.3 has been developed, which comprises a belt reinforcement layer 54 wound with a reinforcement member (a spiral member) 53 that is composed of an organic fiber or a steel to in parallel to equator surface of the tire, on an outside of a crossing belt 52 including at least of two belt layer 52a and 52b arranged an inside of a tire tread 51 (see patent reference 1). In recent years, there appears that a tire for a truck bus or two-wheeler including same structure as above. A nylon fiber, an aromatic polyamide, steel, or the like is conventionally used as the above reinforcement member that is spirally wound along with the tire equator surface. Above all, the aromatic polyamide and steel are not extended at high temperature so that separation can be controlled effectively. Further, in the view of that the aromatic polyamide is lighter than steel, total weight of the tire is lessened so that control stability can be improved.
In case of that those reinforcement member is wound to a crown portion of the tire, due to so-called "hoop effect", the reinforcement member operates to suppress the crown portion of the tire. Therefore, even when the tire rotates at high speed, the tire is not swell due to centrifugal force so that controlling stability and durability can be improved.
Reference document 1: Japanese Unexamination Patent Application Publication No.2001-180220

### DISCLOSURE OF THE INVENTION

### PROBLEMS TO BE SOLVED BY THE INVETION

The tire wound with the spiral member can prevent the belt layer from rising as above. However, since the spiral member, which is wound in equator direction, has higher tension than that of the rubber member, shearing strain of the rubber (a coating rubber of the crossing belt and a coating rubber of the spiral reinforcement belt) is large. It raises a problem that cracks are apt to occur. Particularity, in recent year, in the view of speeding up of the vehicle and flatting of the pneumatic tire, it is required to strongly control separation occurred between the belt layer and the belt reinforcement layer.

The present inventor has intensively studied causes of separation and then found that following behavior causes separation.
When contacting with the road, the end of the belt layer of the crossing belt moves in a tire circumference direction (equator direction) and extends in circumference direction. This occurs, since the tread portion has a diameter difference that outer diameter becomes small as accessing to the tread end gradually from the tread center portion. Such the diameter difference is absorbed due to that the tread portion (such as the belt layer or the belt reinforcement layer) is bending-deformed in the axial direction when contacting with the load. However, since the tire is round at 360 degree in the equator direction, roundness is absorbed with respect to the equator direction, also. Thereby, the end portion of the belt layer, which has small diameter and is provided in an interior of the tread rubber, extends to contact with a flat road. However, a reinforcement element (the cord), which extends in the circumference direction substantially, is buried in the belt reinforcement layer such as the spiral reinforcement layer, the belt reinforcement layer hardly extends in the circumference direction. On the other hand, as above, the end portion of the belt layer in the crossing belt extends in the circumference direction. Thereby, a gap of deformation occurs in the circumference direction on the overlap portion where the end portion of the belt layer overlaps the spiral reinforcement layer. Such a gap becomes strain. Then strain applied to a rubber between both of them to make cracks occur readily. In other words, large shearing strain occurs in the circumference direction between both end of belt layer of the crossing belt and the belt reinforcement layer. Due to such shearing strain, cracks occur. Generally, the cracks occur from the end portion of the belt layer of the crossing belt.

As a method of controlling such shearing strain in the circumference direction, it is considered that a distance is secured by disposing a rubber layer between both end portions of a belt layer 52a and 52b and a belt reinforcement layer 54 so as to lower strain level. However, since the belt reinforcement layer 54 is located on the belt layer 52a and 52b in radius direction outwardly and a reinforcement element (a spiral member) of the belt reinforcement layer 54 is substantially wound in equator direction in parallel, it is difficult to manufacture a tire with arranging a predetermined rubber member between the belt layer 52a and 52b and the belt reinforcement layer 54.
The reasons will be given as follows. In vulcanizing process, a molded unvulcanized tire (a green tire) is pressed with applying heat to be vulcanized. At this point, the green tire is molded in the form of the mold, with being expanded in the range of 2% to 7 %. In the expanding, since the belt reinforcement layer 54 includes a cord member (the spiral member 53) which is wound inside in equator direction in almost parallel, the belt reinforcement layer 54 can not extend. On the other hands, since the cord members of the belt layer 52a and 52b decline with respect to the equator direction within 15 to 75 degree, the rubber between the cords expand. Thereby, its outer circumference extends and expands. In this way, in vulcanizing process, since the spiral belt (the belt reinforcement layer 54), which is arranged on the outside of the belt layer 52a and 52b as "hoop" does not extend in the circumference direction and the belt layer 52a and 52b of its inner side is expanded in the equator direction, when the rubber member is disposed between the belt layer 52a and 52b and the belt reinforcement layer 54, the unvulcanized rubber of the rubber layer is pressed out due to passing through the spiral member 53 to be absorbed in the radius direction outwardly or draining in the width direction outwardly of the belt reinforcement layer 54. As the result, it is difficult to keep distance between the belt layer 52a and 52b and the belt reinforcement layer 54. It occurs at an initial vulcanizing process, because, in the initial vulcanizing process, the unvulcanized rubber is a very soft fluid, while the reinforcement element prevents the belt layer 52a and 52b and the belt reinforcement layer 54 from flowing.
In other words, though it is effective to secure the distance between the belt layer 52a and 52b and belt reinforcement layer 54 as the method of controlling shear strain in circumference direction, on manufacturing process, it becomes difficult to perform it by arranging a rubber layer on it. Therefore, at present, it is very difficult to realize it.
Attention is drawn to EP0,600,398A which discloses a system of different belt reinforcement layers.

In the view of the above problem, the present invention has been prepared. It is object of the present invention to provide a tire capable of controlling separation between the belt layer and belt reinforcement layer strongly, which comprises a belt reinforcement layer having effective hoop effect in a tread end and has excellent driving stability and durability in a vehicle driving at high speed.

### MEANS FOR SOLVING THE PROBLEM

According to a first aspect of the present invention, there is provided a pneumatic tire according to claim 1.
According to a second aspect of the present invention, there is provided that the pneumatic tire according to claim 1 wherein the number of twisting the cord constituting the second spiral reinforcement layer is larger than number of twisting the cord constituting the first spiral reinforcement layer.
According to a third aspect of the present invention, there is provided that the pneumatic tire according to claim 2, wherein the cord of the first spiral reinforcement layer is a twisted aromatic polyamide cord and the cord of the second spiral reinforcement layer is a twisted nylon cord.
According to a fourth aspect of the present invention, there is provided that the pneumatic tire according to any of claims 1 to 3, length of the overlap portion of the second spiral reinforcement layer is 10 mm or more and 20 % or less of a width of the tread.

### EFFECT OF THE INVENTION

The pneumatic tire according to the present invention comprises the belt reinforcement layer disposed across the full width of the belt on an outside of the crossing belt including at least two belt layer wherein the reinforcement layer includes the first spiral reinforcement layer disposed on the tread center portion and its width is narrower than the width of the tread and the second spiral reinforcement layer that covers the end portion of at least one belt layer out of the two belt layer and the diameter of the cord constituting the reinforcement layer is finer than the diameter of the cord constituting the first spiral reinforcement layer and wherein the overlap portion that is the reinforcement layer is double by turning it back at the tread end portion is disposed on a part of the second spiral reinforcement layer. Thereby, it is possible to obtain the tire capable of controlling separation between the belt layer and belt reinforcement layer strongly, comprising the belt reinforcement layer having effective hoop effect in a tread end and having excellent driving stability and durability in a vehicle driving at high speed.
Since the second spiral reinforcement layer is double, in the vulcanizing process, the unvulcanized rubber can be prevented from draining and secure the distance between the crossing belt and the second spiral reinforcement member readily. That is, in case of that the rubber surrounding the crossing belt layer effuses through the second spiral reinforcement layer, since its resistance increases by making the second spiral reinforcement layer double, the rubber is hardly absorbed. It is required to make the second spiral reinforcement layer double, in case of that the second spiral reinforcement layer continuously is continuously turned back at the tread end without being cut. In case of that the cord of the second reinforcement layer is made to be fine, there is advantage that hardness can be secured, since the cord can be made to be double with controlling gauge. Also, there is advantage that cracks hardly occurs, since an interface between the rubber layer and the cord becomes small in case of that the cord is fine.
At this point, when length of the overlap portion of the second spiral reinforcement layer is 10 mm or more and width of that is 20 % or less of width of the tread, hoop effect due to the second spiral reinforcement layer at tread end can be enhanced suitably. Thereby, not only driving stability performance but also comfortable ride performance can be improved moreover.
When the number of the cord constituting the second spiral reinforcement layer is larger than that of the cord constituting the first reinforcement layer, separation of the rubber inside the second spiral reinforcement layer can be prevented and durability can be improved moreover.
When the first spiral reinforcement layer is made of the cord formed by the twisted aromatic polyamide and the second spiral reinforcement layer is made of the cord formed by the twisted nylon, which has more excellent adhesive performance and more flexible than aromatic polyamide, not only durability but also comfortable ride performance can be improved.

The Fig. 1 is a cross-sectional view showing a structure of a pneumatic tire according to a preferred embodiment of the present invention.
The Fig. 2 is a table gathering the result of a vehicle-driving test. The Fig. 3 is a cross-sectional view showing a structure of the conventional pneumatic tire including the belt reinforcement layer.

### EXPLANATION OF THE SYMBOL

A numeral reference 10 denotes the pneumatic tire, 11 denotes the tread portion, 12 denotes the sidewall portion, 13 denotes the bead portion, 14 denotes the carcass layer, 15 denotes the crossing belt, 15a denotes the first belt layer, 15b denotes the second belt layer, 16 denotes the belt reinforcement layer, 17 denotes the first spiral reinforcement layer, 18 denotes the second spiral reinforcement layer, 18a denotes the first layer of the second spiral reinforcement layer, 18b denotes the second layer of the second spiral reinforcement layer and 18z denotes the overlap portion.

### A PREFERRED EMBODIMENT FOR CARRYING OUT THE INVENTION

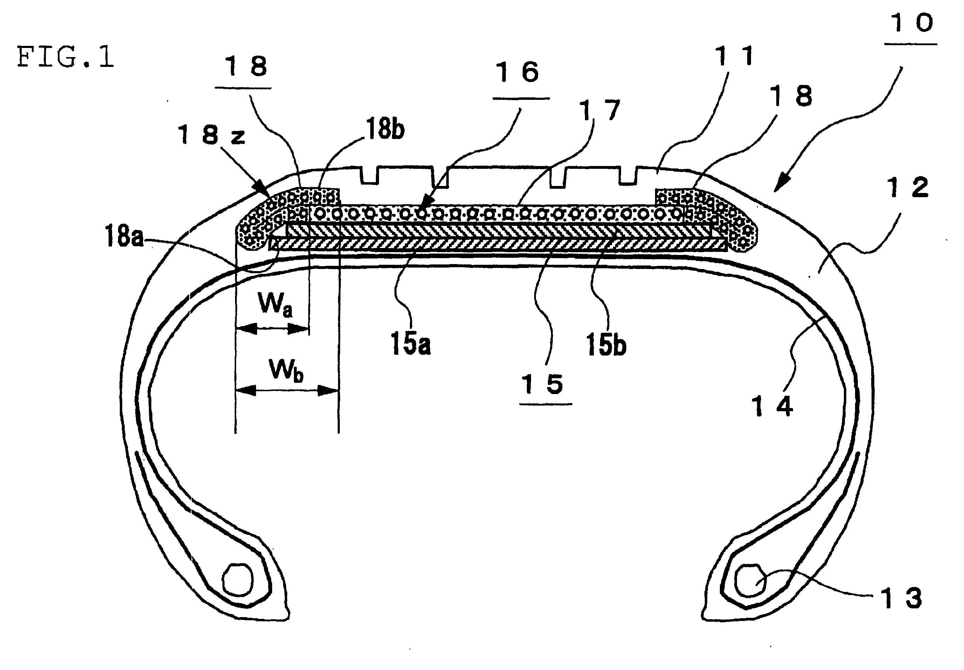

The Fig. 1 is the cross-sectional view showing the structure of the pneumatic tire according to the preferred embodiment of the present invention. In this figure, numeral reference 11 denotes the tread portion including a tread pattern on a surface thereof, 12 denotes a sidewall portion, 13 denotes the bead portion, 14 denotes the carcass layer, 15 denotes the crossing belt including the first and second belt layer 15a and 15b, which are interposed between the tread portion 11 and carcass layer 14 the arranged so that each of cord thereof cross each other, 16 denotes the belt reinforcement layer including the first spiral reinforcement layer 17 that covers the crossing belt 15 widely as the tread center is regarded as center and its width is narrower than width of the tread portion, and the second spiral reinforcement layer 18 covering at least the end portion (herein both of the end portion) of at least one of the belt layer 15a and 15b.
The second spiral reinforcement layer 18 according to the embodiment is continuously turned back at the tread end portion without being cut. That is, when a layer located in the second spiral reinforcement layer 18 in the tire diameter direction inwardly is regarded as a first layer 18a and a layer located in the second spiral reinforcement layer 18 in the tire diameter direction outwardly is regarded as a second layer, the second spiral reinforcement layer 18 according to the embodiment includes the overlap portion 18z where the first layer 18a and the second layer 18b are overlapped.
According to the embodiment, a steel cord is used as the reinforcement element (the cord) of the first and second belt layer 15a and 15b. Each of cord angle of the first and second belt layer 15a and 15b is preferably in the range of 15 to 75 degree. Thereby, shearing stiffness of the inner surface of the crossing belt 15 can be maintained highly.

According to the belt reinforcement layer 16, the aromatic polyamide (formal name is an allaromatic polyamide or an aramid) is used as the cord constituting the first spiral reinforcement layer 17 and the nylon is used as the cord constituting the second spiral reinforcement layer 18. The number of twisting the cord constituting the second spiral reinforcement layer 18 is larger than that of the cord constituting the first spiral reinforcement layer 17.
The cord made of the aromatic polyamide is customarily classified into para-type developed in 1960s, which has excellent tensile strength, elastic modulus and chemical resistance, and meta-type developed thereafter, which has excellent heat resistance, fire protection performance and chemical resistance. The para-type polyamide is generally used in the tire at present, which is known as a Kevlar (It's name of article: made by Du Pont). Since the Kevlar is light and has high strength, it is suitable to use it as an element of the spiral reinforcement member. However, there is an objection that the Kevlar is, in adhesive property to a rubber, inferior to the nylon. On the other hand, the nylon is, in strength, inferior to the Kevlar. According to the embodiment, the Kevlar having high strength is used in the cord of the first spiral reinforcement layer 17 covering almost the tread center contributing to driving stability of the tire. Also, the nylon having excellent adhesive property to the rubber is used in the cord of the second spiral reinforcement layer 18 covering the end portion of the crossing cord 15 where cracks is apt to occur. The nylon is inferior to the Kevlar in strength as mentioned above. However, according to the embodiment, the overlap portion 18z is provided on the second spiral reinforcement layer 18 so that sufficient hoop effect can be obtained, even when the element of the cord is the nylon. Though the nylon is a trade name, it is used in not only parts for a vehicle but also general article, as nylon 6, nylon 66 and the like. Therefore, it will be used herein, as it is.

Next, an explanation of the number of twisting will be given below.
Usually, a spiral cord is made by bundling an aromatic polyamide fiber together to be 0.4 mm of bundle and then twisting two or three the bundle. Generally, the number of twisting is 30 times in the range of 100 mm. The smaller the number of twisting times is, the larger stiffness of the cord becomes. However, when the number of twisting is small, since the fiber is directed toward a direction of the cord, the fiber directly suffers compression with respect to a compression of the cord. Therefore, in case of that it is used in the tire, the tire is apt to be exhausted and gives rise to problem regarding its durability. On the other hand, when the number of twisting is larger, initial tensile stiffness of the cord declines. However, since the direction of the fiber is twisted at large angle with respect to the cord direction, the fiber does not is not compressed directly even when suffering compression in the cord direction. Therefore, excellent fatigue-durability cord can be obtained.
In the other word, the cord whose the number of twisting is small has bad fatigue-durability, while the cord whose the number of twisting times is large lacks strength in low strain. Accordingly, it has been considered that 30 times is general times for twisting it, in the view of the above both fault of them.
In the belt reinforcement layer 16 according to the present invention, the number of twisting the cord of the second spiral reinforcement layer 18 is larger than that of the first spiral reinforcement layer 17, because, in case of that the number of twisting the cord is large, there is a shape-aspect that the surface of the cord becomes rough as a net in tug and pull. The occurred cracks surmount the concavity and convexity so as to extend to in the cord direction. That is, in order to delay the extension of cracks, it is effective to make the concavity and convexity of the surface of the cord large, that is, make the number of twisting large. Accordingly, when the surface of the cord is rougher, that is, when the number of twisting is large, it is effective to delay extension of cracks.
Also, in case of that the number of twisting times, since the cord cannot take small strain, the spiral belt can extend when an end portion of the crossing belt expands at curing. Therefore, a distance between the crossing belt 15 and the second spiral reinforcement layer 18 can be secured.
Concretely, the number of the twisting the cord of the second spiral reinforcement layer 18 is preferably 35 times in case of that the number of the twisting the cord of the first spiral reinforcement layer 17 is 30. Furthermore, 35 times is more preferable. However, a limit of the number of twisting is about 70 times. Therefore, when the number of twisting exceeds 70 times, strength of the cord declines since amount of the twisting becomes too large. Also, in manufacturing, it is impossible to twist it 80 or 90 times in the range of 10 mm.

In the embodiment, as above, the first spiral reinforcement layer 17 is arranged in wide range as the tread center portion is the center thereof. On the other hand, the second spiral reinforcement layer 18 covers at least one of end portion of two belt layers 15a and 15 b and includes the overlap portion that the cord is double.
As the Fig. 1, in case of that the first belt layer 15a, which is the belt layer of inside the crossing belt 15 in the diameter direction, is wide and the second belt layer 15b, which is the belt layer of the outside of the crossing belt 15 in the diameter direction, is narrow, it is preferable to arrange the second spiral reinforcement layer 18 so as to cover the end potions of both of belt layer 15a and 15b. For example, when the cord constituting the belt layer 15a arranged in the diameter direction inwardly and having large belt width is a cord formed by twisting the Kevlar (the aromatic polyamide), a carbon or a glass fiber, and the cord constituting the second belt layer 15b arranged in the diameter direction outwardly and having narrow belt width is a steel cord, the second spiral reinforcement layer 18 may be arranged so as to cover the end portion of the second belt 15b whose the end portion thereof is narrower than that of the first belt layer 15a, since the second belt having narrow width has high compression stiffness and cracks are apt to occur thereon.
As the embodiment, when the spiral at the tread end portion is made to be double so as to provide the overlap portion 18z, sudden failure can be prevented and extension of the failure can be delayed even when cracks occur inside of spiral (a first layer 18a), since the second spiral (the second layer 18b) exists outside.
Also, when a diameter of the spiral is made to be fine, extension of the failure can be delayed, because in the fine cord cracks hardly extend, generally. Further, in case of that the diameter of the cord is fine, even when the spiral is double, thickness thereof can be made to be thin. That is, when the spiral is overlapped under a statement of thick line diameter, it becomes difficult to bend the belt outside of the surface. As a result, the belt behaves firmly. This gives rise to problem that contact length cannot be obtained sufficiently and then a contact area decreases. On the other hand, when the cord having fine diameter is made to be double, it approaches to outwardly surface bending hardness of a single spiral whose the cord diameter is thick, the belt of a tread shoulder portion can be flexible.

Next, a method of forming the overlap portion 18z will be explained as follows.
According to the embodiment, the first layer 18a is formed by spirally winding a belt-shaped ribbon formed by coating a plurality of nylon cord with the rubber in the tread end portion direction from the tread center side in almost parallel to the equator direction and then the second layer 18b is formed by turning back the belt-shaped ribbon at the tread end portion in the tread center direction without being cut. When the second spiral reinforcement layer 18 is formed in this way, since there is not a split of the cord on the tread end portion, sufficient hoop effect can be exhibited even on the tread end portion. If the slit of the cord exists on the tread end portion, since the cord may flay out from the slit, durability of the tire declines. However, according to the winding of the present invention, durability can be improved and the excellent tire against failure can be obtained. Also, thereby, since the second spiral reinforcement layer 18 including the overlap portion 18z can be formed by one member, efficiency of production can be improved.
At this point, it is preferred to make length of the overlap portion 18z 10 mm or more and 20 % or less of the tread width. That is, since the second spiral reinforcement layer 18 is provided in order to protect failure from the end portion of the crossing belt 15, it is sufficient to cover only the tread end portion centrally. It is ideal to cover most parts with the first reinforcement layer having high strength. The end portion of the crossing belt 15 can be sufficiently covered with 10 mm of width. Since 40 % of area of the tread width is covered with the second spiral reinforcement layer 18 in case of that its width exceeds 20 % of the tread width, this give rise to a fear that gives contagion to the driving stability. The overlap portion 18z of the second spiral reinforcement layer is 10 mm, and a portion being single layer of the second spiral reinforcement layer 18 may be 10 mm additionally. That is, the second spiral reinforcement layer may be so configured that the width of the first layer 18a thereof is 10 mm, the width of the second layer thereof is 20 mm, 10 mm out of this 20 mm on the tread end portion side may overlaps the first layer 18a and 10 mm on the tread center side may overlap the first spiral reinforcement layer.

Regarding a relation of position between the first spiral reinforcement layer 17 and the second spiral reinforcement layer 18, as shown in the Fig. 1, a part of the first spiral reinforcement layer 17 may overlap with one part of the second spiral reinforcement layer 18. For example, the first spiral reinforcement layer 17 may occupy 80 % of the tread width including the center portion of the tread, the first layer 18a (a layer in the diameter direction inwardly; width *Wₐ*) of the second spiral reinforcement layer 18 may exist on 10 % of both ends thereof respectively and the second layer 18b (a layer in the diameter direction outwardly; width *W_{b})* of the spiral reinforcement layer 18 may exist on 12 % of both ends thereof. In such the case, 10 % of an area from a left end of the tread (width *Wₐ*) is the overlap portion 18z of the second spiral reinforcement layer 18. In next 2 % of an area (*W_{b}-Wₐ*)*,* the first spiral reinforcement layer 17 exists in the diameter direction inwardly and the second spiral reinforcement layer exists in the diameter direction outwardly. In next 76 % of an area, the first spiral reinforcement layer 17 only exists. In next 2 % of an area, the first spiral reinforcement layer 17 is overlapped with the second spiral reinforcement layer 18. In last 10 % (a tread right end side), the overlap portion is formed. In this way, since the first spiral reinforcement layer 17 and second reinforcement layer 18 are so arranged as to overlap each other at each of end portion, careless failure core can be removed.

According to the present embodiment, the belt reinforcement layer 16, which is arranged across the full width of the crossing belt 15 and on the outside of the crossing belt 15 including the first belt layer 15a and the second belt layer 15b arranged in such a manner that each of the cord crosses, comprises the first spiral reinforcement layer 17 that widely covers the crossing belt 15 as the tread center portion is center, has narrower width than the width of the tread and made of the aromatic polyamide and the second spiral reinforcement layer that covers both end portion of the two belt layer 15a and 15b, made of the nylon and has finer cord diameter than the diameter of the cord of the first spiral reinforcement layer 17 and the overlap portion 18z that the reinforcement layer is double on a part of the second spiral reinforcement layer 18. Thereby, separation occurred between the belt layer and the belt reinforcement layer can be controlled strongly and it is possible to obtain the pneumatic tire, which comprises the belt reinforcement layer having effective hoop effect in the tread end portion and has excellent driving stability and excellent durability of the tire at high speed driving.
Also, since the second spiral reinforcement layer 18 is overlap, in case of that cracks occur in the inner spiral, failure can be delayed owing to the outer spiral.

In the above embodiment, material of the cord of the first spiral reinforcement layer 17 is the aromatic polyamide and that of the cord of the second spiral reinforcement layer 18 is nylon. However, both of material of the cords of the first spiral reinforcement layer and the second spiral reinforcement layer may be the aromatic polyamide. In this case, same effect can be obtained.
Though the steel cord is used as the cords of the first belt layer 15a and the second belt layer 15b in the embodiment, one of the cords may be steel and the other may be the organic fiber cord such as the aromatic polyamide or the like. A carbon cord made by twisting a carbon fiber may be used as the cord of the first (inner) of the crossing layer.

### Example

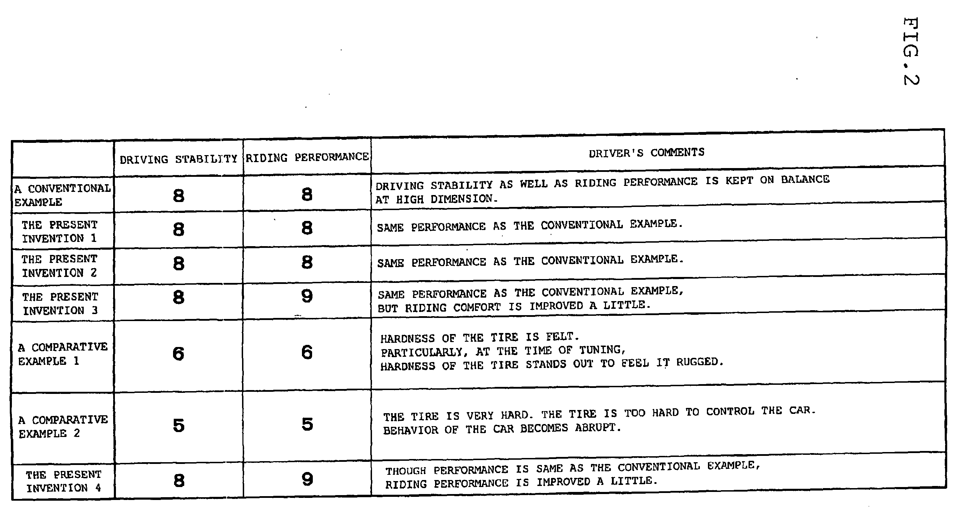

Two types of durability test A and B were carried out by preparing the tire according to the present invention comprising the belt reinforcement layer including the two spiral reinforcement layer as the Fig. 1 (the present invention 1 to 4), the conventional tire comprising one spiral reinforcement layer as the Fig. 2 (conventional example) and a tire having same structure as the present invention 1 and but differing from material of a cord constituting a second spiral reinforcement layer and width of an overlap portion of the present invention 1 (comparative example 1 and 2) and using a dram test machine. The tire is a high performance tire for a car and a size thereof is 245/45R18 (an outer diameter of the tire: 677 mm, a rim width: 8.5 inch and a rim diameter: 18 inch).
These tire comprises two tire carcass layer striding a pair of a bead core in toroid-formed. The carcass layer includes a 0.5 mm of twisted nylon cord. The both of carcass layer are a radial tire (angle with respect to the equator direction is 90 degree). The carcass is turned back as the bead core is center through the bead core.
The two crossing belt reinforcing the crown portion (the tread portion) composed by arranging so-called 1×3 type-cord, which is formed by twisting three 0.18 mm of single steel line, with being declined with respect to the equator surface at 40 degree. The cords are crossed each other. Placing interval is 35/50 mm.
These tire width is 245 mm. The width of belt layer in the diameter direction inwardly of the crossing belt is 240 mm and the width of the belt layer in the diameter direction outwardly thereof is 220 mm. The spiral reinforcement layer is provided on the outside of the crossing belt.

According to the conventional tire, the spiral reinforcement layer has a feature that a twisted aromatic polyamide (the Kevlar) having 0. 7 mm of diameter is arranged at 50/50mm of placing interval. The number of twisting the Kevlar is 30/100mm. Also, its width is 250 mm and the crossing layer is wholly covered with the one reinforcement layer. The spiral reinforcement layer is manufactured by covering arranged two Kevlar cord with an unvulcanized rubber in parallel so as to be strip-formed and then winding them to the crossing belt at tire molding. According to the present invention 1, as shown in the Fig.1, the conventional Kevlar spiral is replaced with two spirals. The first spiral reinforcement layer is made of same material and placing as the conventional spiral. Also, in the first spiral reinforcement layer, 0.7 mm of the twisted aromatic polyamide (the Kevlar) cord is arranged at 50/50mm of placing interval. Further, its width is 200 mm and this is provided symmetrically with respect to the center of the tire. The second spiral reinforcement layer includes a 0. 5 mm of twisted Kevlar cord, its placing interval is 50/50mm and the number of the twisting is 30/100mm. The second spiral reinforcement layer is stated to wind from a winding end portion of the first spiral reinforcement layer and then its winding direction is turned back at the tread end so that the second layer is formed. The second spiral reinforcement layer overlaps the first spiral reinforcement layer to be ended. Also, the width the spiral of the first layer (inner layer) of the second spiral reinforcement layer is 25 mm and width in the diameter direction outwardly of that is 35 mm. That is, the spiral of the second layer (outer layer) of the second spiral reinforcement layer overlaps the first spiral reinforcement layer in only 10 mm. Accordingly, the total layer width of the spiral reinforcement layer that the first spiral reinforcement layer is add to the second spiral reinforcement layer is 250 mm same as the conventional example.
The tire according the present invention 2 differs from the tire according to the first aspect in that the number of twisting times is 50/100mm. the rest of structure is same as the tire of the present invention 1.
The tire according to comparative example 1 includes a 0.7 mm of the twisted Kevlar cord as the cord of the second spiral reinforcement layer and the rest of structure is same as the tire according to the present invention 1.
According to the tire according to the comparative example 2, the width of the first spiral reinforcement layer is 120 mm, the width of the first layer (inner layer) of the second spiral reinforcement layer is 65 mm and its width in the diameter direction inwardly is 75mm. The rest of structure is same as the tire according to the present invention 1. In the comparative example 2, the width of overlap portion where the second spiral reinforcement layer overlaps each other is 65 mm and 26.5 % of the tread width.
The tire according to the present invention 4 differs from the tire of the present invention 4 in material of the crossing belt and its width. Concretely, the width of the first belt layer (inside) of the crossing layer is 270 mm and 0.5 mm of twisted carbon fiber is used, instead of the steel cord. Placing interval is 50/50mm and it is arranged at 40 degree with respect to the equator direction. The number of twisting thereof is 30/100mm. The width of the first belt layer is wider than that of the tread. The first belt layer is arranged up to an upper portion of a tire side along with the carcass ply with sticking firmly to the carcass ply.
On the other hand, second (outer) belt layer has same material and angle as the first layer (inner side) of the present invention 3. In other words, according to the present invention 4, one belt of the present invention 3 is changed to carbon and belt width becomes larger than that of the present invention 3.

The durability test was performed as follows. The tire was pressed to a steel dram having 3 mm of diameter by predetermined pressure and the tire is made to drive at high-speed. After the tire has driven for predetermined hours at constant speed, the tire is dismantled to inspect cracks.

### The test condition A

The tire was mounted to 8.5×18 of rim and inner pressure therein was set to 180 kP lower than 220 kP that is designated as inner pressure. The tire was pressed against the dram at CA-1 degree, SA0 degree and 5kN of load, and was made to drive for 100 hours at 130 km/h and then the dram was stopped. Incidentally, tire inner pressure was set to pressure lower than designated inner pressure, in order to advance occurring of the failure of the tire by making deflection amount of the tire large. Actual driving condition is made by keeping temperature around the dram at 10°C, blowing 10 m/s of wind into the tire continuously and preventing from occurring of extreme heat of the tire.

### The test condition B

The same dram as the test condition A was used in the test. 8 kN of load, which is not used normally, was applied to tire. Under such condition, the tire was driven for 100 hours at 130km/h. Condition except load condition was same as the test condition A.

The result of the test is as follows.

### (1) The conventional tire

### The test condition A

The tire finished full distance.
A crack occurred on the inner belt layer of the crossing belt. Length of the crack was 5mm along with the inner belt layer horizontally. Also, the crack extended in the vertical direction (the diameter direction) outwardly to reach to the spiral reinforcement layer. Minute tire separation occurred on the spiral reinforcement layer.

### The test condition B

The tire did not finish full distance, since it burst in 67 hours.
When the burst tire was inspected, it was confirmed that 10 mm or more of cracks occurred on both of the inner belt and outer belt. Also, the cracks reached to the spiral reinforcement layer and the rubber of the cord of the spiral reinforcement layer separated over 7 mm in all circumferences.

### (2) The tire according to the present invention 1

### The test condition A

The tire finished full distance.
3 mm of cracks occurred on the inner belt layer of the crossing belt along with the inner belt layer vertically. The cracks did not extend in the vertical direction (the diameter direction) outwardly. Separation of the rubber did not occur on the spiral reinforcement layer.

### The test condition B

The tire finished full distance.
4mm of cracks occurred in the horizontal direction of the inner belt layer. There were not cracks on the outer belt layer.
Separation of the rubber occurred on the inner (first) layer of the second spiral reinforcement layer. The width of separation is 3 mm. It occurred in the range of 360 degree in all circumferences. Separation of the rubber did not occurred on the outer (second) layer of the second spiral reinforcement layer at all.

### (3) The tire according to the second aspect of the present invention The test condition A

The tire finished full distance.
3 mm of cracks occurred on the inner belt of the crossing belt along with the inner belt layer in the horizontal direction. However, the cracks did not extend in the vertical direction (the diameter direction) outwardly.
Separation of the rubber did not occur on the spiral reinforcement layer.

### The test condition B

The tire finished full distance.
4 mm of cracks occurred on the inner belt layer in the horizontal direction. Cracks did not occur on the outer belt layer. Separation of the rubber occurred on the inner (first) layer of the second spiral reinforcement layer. Its width was 2mm. it did not join in all circumferences but is spotted.
Separation of the rubber did not occur on the outer (second) layer of the second spiral reinforcement layer at all.

### (4) The tire according to the present invention 3

### The test condition A

The tire finished full distance.
Crack occurred on the inner belt of the crossing belt. 3 mm of the crack occurred vertically along with the inner belt layer. However, crack did not extend in the vertical direction (the diameter direction) outwardly.
Separation did not occur in the spiral reinforcement layer.

### Test condition B

The tire finished full distance.
4 mm of cracks occurred on the inner belt layer in the horizontal direction. Cracks did not occur on the outer belt layer.
Separation of the rubber occurred on only one place of the inner (first) of the second spiral reinforcement layer. Its width is 1 mm and its length is 10 mm in the circumference direction. Separation of the rubber did not occur on the outer (second) layer of the second spiral reinforcement layer at all.

### (5) The tire according to comparative example 1

### The test condition A

The tire finished full distance.
2 mm of cracks occurred on the inner belt of the crossing belt along with the inner belt layer in horizontal direction. However, the cracks did not extend in the vertical direction (the diameter direction) outwardly.
Separation of the rubber did not occur on the spiral reinforcement layer.

### The test condition B

The tire finished full distance.
4 mm of cracks occurred on the inner belt in the horizontal direction. Cracks did not occur on the outer belt layer.
Separation of the rubber occurred on the inner (first) layer of the second spiral reinforcement layer. Its width is 5 mm and it existed in the range of 360 degree in all circumferences.
Separation of the rubber did not occur on the outer (second) layer of the second spiral reinforcement layer at all.

### (6) The tire according to the comparative example 2

### The test condition A

The tire finished full distance.
3 mm of cracks occurred on the inner belt layer of the crossing belt along with the inner belt layer in the vertical direction. The cracks did not extend in vertical direction (the diameter direction) outwardly. Separation of the rubber did not occur on the spiral reinforcement layer.

### The test condition B

The tire finished full distance.
4 mm of cracks occurred on the inner belt layer in the horizontal direction. Cracks did not occur on the outer belt layer. Separation of the rubber occurred on the inner (first) layer of the second spiral reinforcement layer. Its width is 2mm. It existed in the range of 360 degree in the circumference direction.
Separation of the rubber did not occur on the outer (second) layer of the second spiral reinforcement layer.

### (7) The tire according to the present invention 4

### The test condition A

The tier finished full distance.
Cracks did not occur on the inner belt layer of the crossing belt. However, 3 mm of cracks occurred on the outer belt layer (steel). The cracks did not extend in the vertical direction (the diameter direction) outwardly.
Separation of the rubber did not occur on the spiral reinforcement layer.

### The test condition B

The tire finished full distance.
Cracks did not occur on the inner belt layer. 4 mm of cracks occurred on the outer belt layer. However, it does not reach to the second spiral reinforcement layer.
Separation of the rubber did not occur on both of the inner (first) layer and the outer (second) layer of the second spiral reinforcement layer at all.

Effect of the present invention is understood from above the result of the test.
It is confirmed that, as compared with the conventional tire, in the tire whose the spiral covering the end portion of the crossing belt is overlap, that is, the tire according to the present invention 1 to 3 and comparative example 1 and 2, even when the inner spiral separates from the rubber so that cracks occur and hoop effect become small under hard condition as the test condition B, the outer spiral can delay failure. The conventional tire cannot finish full distance.
From comparison between the test results of the tire of the present invention 1 and 2, effect of the number of twisting of the second spiral reinforcement layer can be understood. That is, under the test condition B, since the separation of the rubber inside of the second spiral reinforcement layer in the tire according to the present invention 1 joins in all circumferences, it has been confirmed that extension of failure thereof is faster than the present invention 2 whose the number of twisting is larger than that of the present invention 1.
As compared with results of the test according to the present invention 1 and 2, the effect occurred from quality of material of the cord of the second spiral reinforcement layer has confirmed. When the nylon is used as the present invention 3, since it has excellent adhesive property to the rubber, separation of the rubber is very small even under hard condition as the test condition B.

When the cord diameter of the second spiral reinforcement layer is made to be thick as the comparative example, durability can be improved. However, from the result of the test condition B, it has been confirmed that there is a problem regarding separation of the cord. When the thick cord has used as the comparative example 1, under the test separation of the cord is apt to occur and extension of failure is faster than the present invention 1 using the fine cord under the test condition B. Since when the cord diameter of the first spiral reinforcement layer is fine so that hoop effect becomes small and driving stability declines, the cord of the first spiral reinforcement layer was the thick cord.
As compared with the tire according to the present invention 1 and the comparative example 2, though there is not difference between the results of durability test, there is a problem regarding driving stability in the comparative example 2. Also, as compared the tire according to the present invention 3 with the present invention 4, it has been confirmed that, though the present invention 3 differs in the structure of the crossing belt from the present invention 4, there is not difference in the result of the durability test between them. In the present invention 4, it has been confirmed that cracks occurred on the wide inner belt and cracks did not occur on the narrow outer belt layer, since the carbon cord has been used in the inner belt layer, while the steel cord, which is harder than it, has been used on the outer belt layer.

The effect of the inspected driving stability and comfortable ride performance is shown in the table of the Fig. 2.
Each of test cars provided with above tires has been prepared, in order to inspect stability performance and comfortable ride performance. A skilled driver drove the car in a test course, and then the driver's evaluation has been corrected into a score (Perfect score is 10) to compare them. In the test, four wheels was same the tire type.
The test car is a sport type car being rear wheel drive was used and hard driving was carried out in such a manner that max speed is 200 km/h, in order to inspect driving stability at limit state.
From comparison between the conventional tire and the present invention 1 to 3, it has been confirmed that the tire according to the present invention has driving stability and comfortable ride performance same as the conventional example. Comfortable ride performance of the present invention 3 is better than the conventional example, since the nylon cord is more flexible than the Kevlar cord.
In the comparative example, the tire became hard, since the spiral of the shoulder portion overlaps as compared with the conventional example so that the tire hardly gives outwardly. Accordingly, when the spiral is made to be double, it is required to the diameter of the cord is lessened as the tire of the present invention.
In the tire of the comparative example 2, the tire became very hard, since the area where the spiral overlaps is wide, the tire hardly gives even when the diameter of the cord is lessened.
In the tire of the present invention 4, though the first belt is the carbon, same property as the present invention 3 is shown. That is, it has been confirmed that when there is a difference between the structures of the crossing belt, effect of the present invention did not change.

### Industrial Applicability

As above, according to the present invention, it is impossible to provide the tire capable of controlling cracks of the belt end portion without spoiling driving stability of the high-performance tire and having excellent high-speed durability and large-load durability.

## Claims

1. A pneumatic tire comprising:
a crossing belt (15) interposed between a tire tread rubber (11) and a carcass ply and including at least two belt layers (15a, 15b);
a belt reinforcement layer (16) disposed on an outside of the crossing belt (15) across a full width of the crossing belt (15) and wound with a reinforcement member in parallel to an equator surface of the tire, **characterised in that** the belt reinforcement layer comprises
a first spiral reinforcement layer (17) arranged on the center of the tread and having narrower width than width of the tread;
a second spiral reinforcement layer (18), wherein the diameter of a cord constituting the second spiral reinforcement layer is smaller than the diameter of a cord constituting the first spiral reinforcement layer, wherein the second spiral reinforcement layer (18) covers a tread end portion of at least one belt layer out of the two belt layer and includes an overlap portion (18z); and
wherein the overlap portion (18z) is formed by continuously turning back the second spiral reinforcement layer at the tread end portion of the tread without being cut.

2. The pneumatic tire according to claim 1, wherein the number of twists of the cord constituting the second spiral reinforcement layer is larger than number of twists of the cord constituting the first spiral reinforcement layer.

3. The pneumatic tire according to claim 2, wherein the cord of the first spiral reinforcement layer is a twisted aromatic polyamide cord and the cord of the second spiral reinforcement layer is a twisted nylon cord.

4. The pneumatic tire according to any of claims 1 to 3, wherein the length of the overlap portion of the second spiral reinforcement layer is 10 mm or more and 20 % or less of the width of the tread.

## Patentansprüche

1. Luftreifen, der Folgendes umfasst:
einen Kreuzgürtel (15), der zwischen einen Reifen-Laufflächengummi (11) und eine Karkassenschicht eingeschoben ist und wenigstens zwei Gürtellagen (15a, 15b) einschließt,
eine Gürtelverstärkungslage (16), die auf einer Außenseite des Kreuzgürtels (15) über eine volle Breite des Kreuzgürtels (15) angeordnet und mit einem Verstärkungselement parallel zu einer Äquatorfläche des Reifens gewickelt ist, **dadurch gekennzeichnet, dass** die Gürtelverstärkungslage Folgendes umfasst:
eine erste Spiralverstärkungslage (17), die auf der Mitte der Lauffläche angeordnet ist und eine Breite hat, die schmaler als die Breite der Lauffläche ist,
eine zweite Spiralverstärkungslage (18), wobei der Durchmesser eines Kords, der die zweite Spiralverstärkungslage ausmacht, kleiner ist als der Durchmesser eines Kords, der die erste Spiralverstärkungslage ausmacht, wobei die zweite Spiralverstärkungslage (18) einen Laufflächen-Endabschnitt wenigstens einer Gürtellage von den zwei Gürtellagen abdeckt und einen Überlappungsabschnitt (18z) einschließt und
wobei der Überlappungsabschnitt (18z) durch das fortlaufende Umkehren der zweiten Spiralverstärkungslage an dem Laufflächen-Endabschnitt der Lauffläche, ohne dass sie abgeschnitten wird, geformt ist.

2. Luftreifen nach Anspruch 1, wobei die Zahl von Verdrillungen des Kords, der die zweite Spiralverstärkungslage ausmacht, größer ist als die Zahl von Verdrillungen des Kords, der die erste Spiralverstärkungslage ausmacht.

3. Luftreifen nach Anspruch 2, wobei der Kord der ersten Spiralverstärkungslage ein verdrillter Kord aus aromatischem Polyamid ist und der Kord der zweiten Spiralverstärkungslage ein verdrillter Kord aus Nylon ist.

4. Luftreifen nach einem der Ansprüche 1 bis 3, wobei die Länge des Überlappungsabschnitts der zweiten Spiralverstärkungslage 10 mm oder mehr und 20 % oder weniger der Breite der Lauffläche beträgt.

## Revendications

1. Bandage pneumatique, comprenant :
une ceinture de croisement (15), agencée entre une gomme de la bande de roulement du bandage pneumatique (11) et une nappe de carcasse, et englobant au moins deux couches de ceinture (15a, 15b) ;
une couche de renforcement de la ceinture (16), agencée sur un côté externe de la ceinture de croissement (15), à travers l'ensemble de la largeur de la ceinture de croisement (15), et enroulée avec un élément de renforcement, de manière parallèle à une surface de l'équateur du bandage pneumatique, **caractérisé en ce que** la couche de renforcement de la ceinture comprend
une première couche de renforcement en spirale (17), agencée sur le centre de la bande de roulement et ayant une largeur inférieure à la largeur de la bande de roulement ;
une deuxième couche de renforcement en spirale (18), le diamètre d'un câblé constituant la deuxième couche de renforcement en spirale étant inférieur au diamètre d'un câblé constituant la première couche de renforcement en spirale, la deuxième couche de renforcement en spirale (18) recouvrant une partie d'extrémité de la bande de roulement d'au moins une couche de ceinture des deux couches de ceinture et englobant une partie à chevauchement (18z) ; et
la partie à chevauchement (18z) étant formée en retournant de manière continue vers l'arrière la deuxième couche de renforcement en spirale au niveau de la partie d'extrémité de la bande de roulement, sans découpage.

2. Bandage pneumatique selon la revendication 1, dans lequel le nombre de torsions du câblé constituant la deuxième couche de renforcement en spirale est supérieur au nombre de torsions du câblé constituant la première couche de renforcement en spirale.

3. Bandage pneumatique selon la revendication 2, dans lequel le câblé de la première couche de renforcement en spirale est un câblé de polyamide aromatique à torsion, le câblé de la deuxième couche de renforcement en spirale étant un câblé de nylon à torsion.

4. Bandage pneumatique selon l'une quelconque des revendications 1 à 3, dans lequel la longueur de la partie à chevauchement de la deuxième couche de renforcement en spirale correspond à 10 mm ou plus et représente 20% ou moins de la largeur de la bande de roulement.
